# FASCICULE DE BREVET EUROPEEN

(11) **EP 2 172 658 B1**
(45) Date de publication et mention de la délivrance du brevet: **20.08.2014**
(21) Numéro de dépôt: 09171922.9
(22) Date de dépôt: 01.10.2009
(51) Int. Cl.: F16B 5/02, F16B 39/28, H02B 1/30, H02B 1/01

(54) **Dispositif de fixation pour panneau d'armoire électrique**
Vorrichtung zur Befestigung eines Wandelements für einen Schaltschrank
Device for fixing a wall of a control cabinet

(30) Priorité: 06.10.2008 FR 0856739
(43) Date de publication de la demande: 07.04.2010
(73) Titulaire: Hispano Mecano Electrica S.A., 08011 Barcelona (ES)
(72) Inventeur: Valletta, Claire, 08786 Capellades (ES); Forcadell Carapüig, Jordi, 43550 Tarragona (ES); Meyer, Valentin, 57412 Schmittviller (FR)
(74) Mandataire: Dufresne, Thierry

(56) Documents cités:
- EP-A- 1 608 050
- DE-A1- 3 327 587
- GB-A- 1 455 575

## Description

La présente invention se rapporte à un dispositif de fixation pouvant être utilisé pour fixer les panneaux d'une armoire électrique. En particulier, la présente invention se rapporte à un dispositif de fixation selon le préambule de la revendication 1. Un tel dispositif est connu du document GB 1 455 575 A.

En règle générale, une armoire électrique comporte une structure métallique composée de montants verticaux et horizontaux sur lesquels viennent se visser les panneaux de l'armoire.

Un panneau pour armoire électrique comporte une paroi dont un ou plusieurs bords sont repliés vers l'intérieur parallèlement à la surface de la paroi pour former ainsi à chaque bord une double paroi. Pour fixer le panneau sur la structure de l'armoire, des orifices sont percés à travers les double-parois. Les bords du panneau sont appliqués contre les montants de la structure de l'armoire et des vis sont introduites dans les orifices pour fixer le panneau sur les montants.

Le but de l'invention est de proposer un dispositif de fixation d'un panneau d'armoire permettant de guider la vis à travers la double-paroi tout en tenant compte de la tolérance de dimensionnement de la double-paroi.

Ce but est atteint par un dispositif de fixation comportant une vis et un élément tubulaire en matériau plastique ou de type caoutchouc, ledit élément tubulaire comportant une paroi latérale formant un orifice réalisé suivant une direction axiale et destiné à recevoir ladite vis. L'élément tubulaire comporte une ouverture à travers sa paroi latérale, ladite ouverture étant réalisée suivant une trajectoire hélicoïdale circulaire continue dont l'axe suit la direction axiale de manière à conférer à l'élément tubulaire un comportement élastique dans la direction axiale.

Selon une particularité, l'élément tubulaire comporte une pluralité de languettes élastiques découpée dans sa paroi latérale suivant des lignes de découpe parallèles à la direction axiale, les languettes se terminant par une extrémité libre située sur un bord supérieur de l'élément tubulaire.

Selon une autre particularité, chaque languette comporte à son extrémité libre un ergot orienté vers l'intérieur de l'élément tubulaire pour retenir la vis dans la direction axiale.

Selon une autre particularité, les ergots sont répartis de manière égale sur la circonférence du bord supérieur.

Selon une autre particularité, chaque languette élastique comporte un ergot orienté vers l'extérieur de l'élément tubulaire.

Selon une autre particularité, l'élément tubulaire comporte un épaulement.

Selon une autre particularité de l'invention, l'ouverture réalisée suivant la trajectoire hélicoïdale est formée entre l'épaulement et les languettes élastiques de l'élément tubulaire.

L'invention concerne également un panneau pour armoire électrique comportant :
- une paroi dont au moins un bord se prolonge par une aile repliée vers l'intérieur parallèlement à la paroi, de manière à former sur le bord une double paroi, la paroi et l'aile repliée ménageant entre elles un espace le long du bord,
- un premier orifice traversant la double-paroi,
- le panneau comportant un dispositif de fixation tel que défini précédemment,
- l'élément tubulaire dudit dispositif de fixation étant positionné dans la double-paroi et dans l'axe de l'orifice formé à travers la double-paroi.

Selon l'invention, l'élément tubulaire du dispositif de fixation comporte :
- une pluralité de languettes élastiques découpée dans sa paroi latérale suivant des lignes de découpe parallèles à la direction axiale, les languettes se terminant par une extrémité libre située sur un bord supérieur de l'élément tubulaire et chaque languette comportant un ergot orienté vers l'extérieur de l'élément tubulaire, et
- un épaulement,
- l'élément tubulaire étant en appui d'un côté contre la paroi par ses ergots et de l'autre côté contre l'aile repliée par son épaulement.

D'autres caractéristiques et avantages vont apparaître dans la description détaillée qui suit en se référant aux figures annexées précisées ci-dessous :
- la figure 1 représente en détail l'arrière d'un panneau d'une armoire électrique sur lequel est positionné un dispositif de fixation de l'invention,
- la figure 2 représente en coupe transversale un bord d'un panneau d'une armoire accueillant le dispositif de fixation de l'invention,
- la figure 3 représente en perspective l'élément tubulaire du dispositif de fixation de l'invention,
- la figure 4 représente l'élément tubulaire vu en coupe axiale.

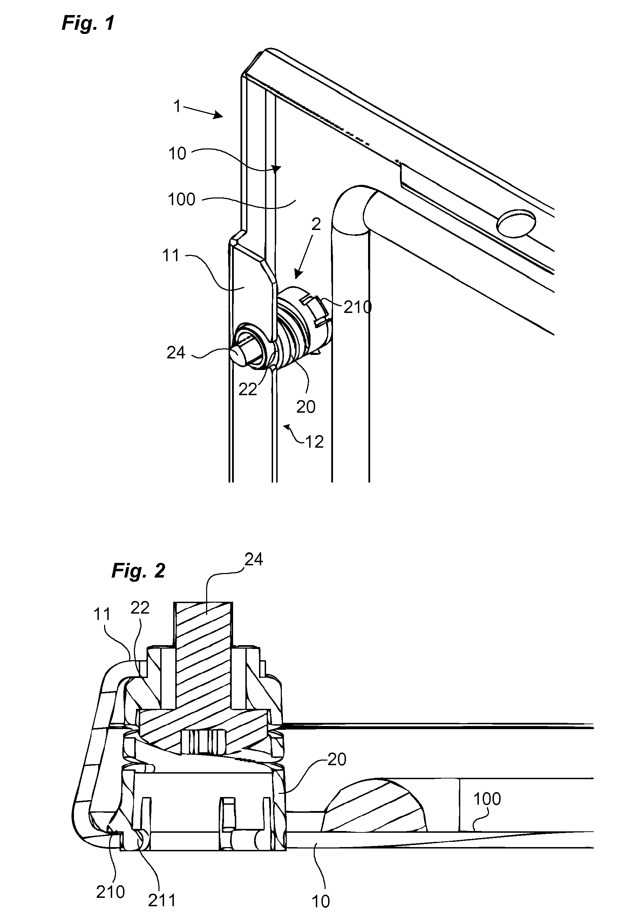

En référence à la figure 1, un panneau 1 d'une armoire électrique comporte une paroi 10 ayant une face interne 100 et une face externe. Un ou plusieurs bords du panneau 1 se prolonge par une aile repliée 11 vers l'intérieur, parallèlement à la face interne 100 de la paroi 10 de manière à former à chaque bord une double-paroi. La paroi et l'aile repliée ménage entre elles un espace 12.

Pour fixer le panneau 1, un ou plusieurs orifices sont percés à travers la double paroi et un dispositif de fixation 2 est employé.

Le dispositif de fixation 2 de l'invention se compose d'un élément tubulaire 20 en forme de bouchon et d'une vis de fixation 24. L'élément tubulaire 20 pourra par exemple être fabriqué en matériau plastique ou en caoutchouc. L'élément tubulaire 20 comporte une paroi latérale définissant un orifice 200 suivant une direction axiale (définie par l'axe (X) sur les figures) dans lequel la vis 24 est introduite. L'élément tubulaire 20 est destiné à être enfoncé dans l'orifice formé à travers la double-paroi et à venir se loger dans l'espace 12 ménagée entre la paroi 10 et l'aile repliée 11, dans l'axe de l'orifice, en prenant appui d'une part contre la face interne de la paroi 10 et d'autre part contre l'aile repliée 11 (figures 1 et 2).

L'élément tubulaire 20 comporte notamment des moyens pour rendre la vis 24 imperdable une fois celle-ci introduite dans son orifice 200 et présente également des moyens pour s'adapter à la tolérance de dimensionnement de l'espace 12 ménagé par la double-paroi.

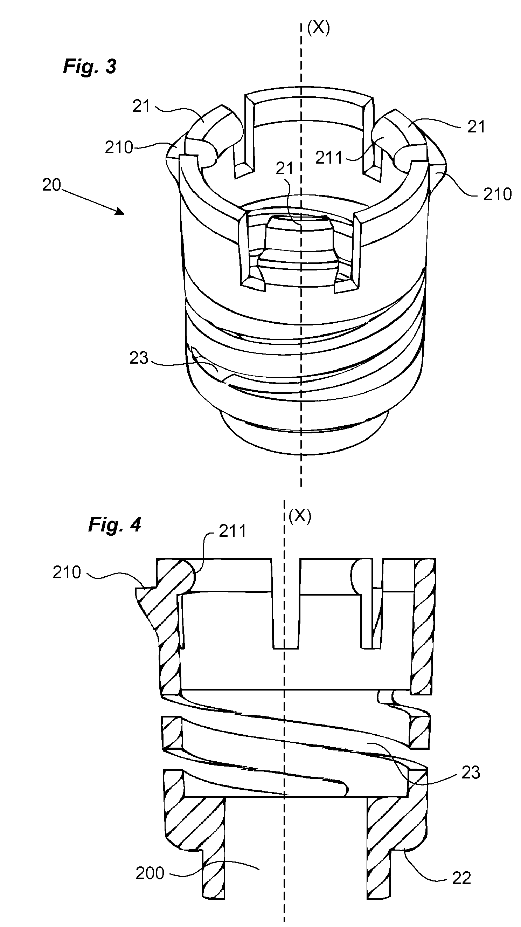

En référence aux figures 3 et 4, l'élément tubulaire 20 comporte une pluralité de languettes élastiques 21 découpées suivant des lignes de découpe parallèles à la direction axiale (X) et se terminant par une extrémité libre sur le bord supérieur de l'élément tubulaire 20. Ces languettes 21 sont destinées à fléchir vers l'intérieur lors de l'introduction de l'élément tubulaire 20 dans l'orifice du panneau 1 et à se redresser ensuite vers leur position initiale pour bloquer l'élément tubulaire 20 dans l'orifice lorsque celui-ci est en place entre la paroi 10 et l'aile repliée 11. Les languettes élastiques 21 comportent chacune un ergot 210 orienté vers l'extérieur et destiné à servir de surface d'appui de l'élément tubulaire 20 contre la face interne de la paroi 10 et ainsi éviter son extraction de l'orifice. A proximité de son bord inférieur, l'élément tubulaire 20 comporte un épaulement 22 (figure 4) lui permettant de prendre appui contre l'aile repliée 11. Lorsque l'élément tubulaire 20 est en place dans l'orifice, il est donc en appui contre la paroi 10 par les ergots extérieurs 210 et en appui contre l'aile repliée par son épaulement 22.

Pour s'adapter à la tolérance de distance entre la paroi 10 et l'aile repliée 11, l'élément tubulaire 20 est fabriqué dans un matériau plastique ou de type caoutchouc. De plus, entre les languettes élastiques 21 et l'épaulement 22, il comporte une ouverture 23 formée à travers sa paroi latérale lui permettant de se comprimer suivant la direction axiale (X) si l'espace 12 ménagée entre la paroi 10 et l'aile repliée 11 est insuffisant. Cette ouverture 23 suit préférentiellement une trajectoire hélicoïdale circulaire continue ayant un axe réalisé dans la direction axiale (X) de l'élément tubulaire, conférant ainsi à l'élément tubulaire 20 une qualité de ressort dans la direction axiale.

Selon l'invention, à son extrémité libre, chaque languette 21 se termine également par un ergot 211 orienté vers l'intérieur de l'élément tubulaire 20. L'ensemble de ces ergots est destiné à réduire le diamètre interne de l'élément tubulaire 21 en vue de retenir la vis 24 dans l'élément tubulaire 20 et de la rendre imperdable lorsque l'élément tubulaire est en place dans l'orifice du panneau 1. De plus, lorsque l'élément tubulaire 20 est logé dans la double-paroi du panneau 1, la vis 24 ne fait pas saillie de la face externe du panneau 1 ce qui permet de pouvoir coucher et manipuler les armoires sans risque de casser la tête de vis ou de déformer le panneau.

## Revendications

1. Dispositif de fixation (2) comportant une vis (24) et un élément tubulaire (20) en matériau plastique ou de type caoutchouc, ledit élément tubulaire (20) comportant une paroi latérale formant un orifice (200) réalisé suivant une direction axiale (X) et destiné à recevoir ladite vis (24), **caractérisé en ce que** l'élément tubulaire (20) comporte une ouverture (23) à travers sa paroi latérale, ladite ouverture (23) étant réalisée suivant une trajectoire hélicoïdale circulaire continue dont l'axe suit la direction axiale de manière à conférer à l'élément tubulaire (20) un comportement élastique dans la direction axiale.

2. Dispositif selon la revendication 1, **caractérisé en ce que** l'élément tubulaire (20) comporte une pluralité de languettes élastiques (21) découpée dans sa paroi latérale suivant des lignes de découpe parallèles à la direction axiale (X), les languettes (21) se terminant par une extrémité libre située sur un bord supérieur de l'élément tubulaire (20).

3. Dispositif selon la revendication 2, **caractérisé en ce que** chaque languette (21) comporte à son extrémité libre un ergot (211) orienté vers l'intérieur de l'élément tubulaire (20) pour retenir la vis dans la direction axiale (X).

4. Dispositif selon la revendication 3, **caractérisé en ce que** les ergots (211) sont répartis de manière égale sur la circonférence du bord supérieur.

5. Dispositif selon l'une des revendications 2 à 4, **caractérisé en ce que** chaque languette élastique (21) comporte un ergot (210) orienté vers l'extérieur de l'élément tubulaire (20).

6. Dispositif selon l'une des revendications 1 à 5, **caractérisé en ce que** l'élément tubulaire (20) comporte un épaulement (22).

7. Dispositif selon la revendication 6, **caractérisé en ce que** l'ouverture (23) réalisée suivant la trajectoire hélicoïdale est formée entre l'épaulement (22) et les languettes élastiques (21) de l'élément tubulaire.

8. Panneau (1) pour armoire électrique comportant :
- une paroi (10) dont au moins un bord se prolonge par une aile repliée (11) vers l'intérieur parallèlement à la paroi (10), de manière à former sur le bord une double paroi, la paroi (10) et l'aile repliée (11) ménageant entre elles un espace (12) le long du bord,
- un premier orifice traversant la double-paroi,
**caractérisé en ce que** :
- le panneau (1) comporte un dispositif de fixation (2) tel que défini dans l'une des revendications précédentes,
- l'élément tubulaire (20) dudit dispositif (2) est positionné dans la double-paroi et dans l'axe de l'orifice formé à travers la double-paroi.

9. Panneau selon la revendication 8, **caractérisé en ce que** l'élément tubulaire (20) comporte :
- une pluralité de languettes élastiques (21) découpée dans sa paroi latérale suivant des lignes de découpe parallèles à la direction axiale (X), les languettes (21) se terminant par une extrémité libre située sur un bord supérieur de l'élément tubulaire (20) et chaque languette comportant un ergot (210) orienté vers l'extérieur de l'élément tubulaire, et
- un épaulement (22),
- l'élément tubulaire (20) étant en appui d'un côté contre la paroi (10) par ses ergots (210) et de l'autre côté, contre l'aile repliée (11), par son épaulement (22).

## Patentansprüche

1. Befestigungsvorrichtung (2), die eine Schraube (24) und ein röhrenförmiges Element (20) aus Kunststoffmaterial oder kautschukartigem Material umfasst, wobei das röhrenförmige Element (20) eine seitliche Wand umfasst, die eine Öffnung (200) bildet, die gemäß einer axialen Richtung (X) ausgeführt und dazu bestimmt ist, die Schraube (24) aufzunehmen, **dadurch gekennzeichnet, dass** das röhrenförmige Element (20) eine Öffnung (23) durch seine seitliche Wand umfasst, wobei die Öffnung (23) gemäß einer kontinuierlichen schraubenförmigen Kreisbahn ausgeführt ist, deren Achse der axialen Richtung folgt, so dass dem röhrenförmigen Element (20) ein elastisches Verhalten in der Axialrichtung verliehen wird.

2. Vorrichtung nach Anspruch 1, **dadurch gekennzeichnet, dass** das röhrenförmige Element (20) mehrere elastische Laschen (21) umfasst, die in seiner seitlichen Wand gemäß parallel zu der Axialrichtung (X) verlaufenden Schnittlinien ausgeschnitten sind, wobei die Laschen (21) mit einem freien Ende, das an einem oberen Rand des röhrenförmigen Elements (20) angeordnet ist, enden.

3. Vorrichtung nach Anspruch 2, **dadurch gekennzeichnet, dass** jede Lasche (21) an ihrem freien Ende eine Nase (211) umfasst, die vom röhrenförmigen Element (20) nach innen ausgerichtet ist, um die Schraube in der Axialrichtung (X) zu halten.

4. Vorrichtung nach Anspruch 3, **dadurch gekennzeichnet, dass** die Nasen (211) gleichmäßig über den Umfang des oberen Rands verteilt sind.

5. Vorrichtung nach einem der Ansprüche 2 bis 4, **dadurch gekennzeichnet, dass** jede elastische Lasche (21) eine Nase (210) umfasst, die vom röhrenförmigen Element (20) nach außen ausgerichtet ist.

6. Vorrichtung nach einem der Ansprüche 1 bis 5, **dadurch gekennzeichnet, dass** das röhrenförmige Element (20) einen Absatz (22) umfasst.

7. Vorrichtung nach Anspruch 6, **dadurch gekennzeichnet, dass** die gemäß der schraubenförmigen Bahn ausgeführte Öffnung (23) zwischen dem Absatz (22) und den elastischen Laschen (21) des röhrenförmigen Elements ausgebildet ist.

8. Platte (1) für einen Schaltschrank, umfassend:
- eine Wand (10), von der sich mindestens ein Rand durch einen nach innen, parallel zu der Wand (10) umgebogenen Flügel (11) verlängert, so dass am Rand eine Doppelwand gebildet wird, wobei die Wand (10) und der umgebogene Flügel (11) zwischen sich einen Raum (12) entlang dem Rand bilden,
- eine erste durch die Doppelwand gehende Öffnung,
**dadurch gekennzeichnet, dass**
- die Platte (1) eine Befestigungsvorrichtung (2) nach einem der vorhergehenden Ansprüche umfasst,
- das röhrenförmige Element (20) der Vorrichtung (2) in der Doppelwand und in der Achse der durch die Doppelwand gebildeten Öffnung positioniert ist.

9. Platte nach Anspruch 8, **dadurch gekennzeichnet, dass** das röhrenförmige Element (20) Folgendes umfasst:
- mehrere elastische Laschen (21), die in seiner seitlichen Wand gemäß parallel zu der Axialrichtung (X) verlaufenden Schnittlinien ausgeschnitten sind, wobei die Laschen (21) mit einem freien Ende, das an einem oberen Rand des röhrenförmigen Elements (20) angeordnet ist, enden und jede Lasche eine vom röhrenförmigen Element nach außen ausgerichtete Nase (210) umfasst,
- einen Absatz (22),
- wobei das röhrenförmige Element (20) an einer Seite über seine Nasen (210) an der Wand (10) und an der anderen Seite über seinen Absatz (22) an dem umgebogenen Flügel (11) anliegt.

## Claims

1. Fastening device (2) comprising a screw (24) and a tubular element (20) made of plastic or rubber-type material, said tubular element (20) comprising a lateral wall forming an orifice (200) produced along an axial direction (X) and intended to receive said screw (24), **characterized in that** the tubular element (20) comprises an opening (23) through its lateral wall, said opening (23) being produced along a continuous circular helical trajectory of which the axis follows the axial direction so as to confer on the tubular element (20) an elastic behaviour in the axial direction.

2. Device according to Claim 1, **characterized in that** the tubular element (20) comprises a plurality of elastic tags (21) cut into its lateral wall along cutting lines parallel to the axial direction (X), the tabs (21) being terminated by a free end situated on an upper edge of the tubular element (20).

3. Device according to Claim 2, **characterized in that** each tab (21) comprises at its free end a lug (211) oriented towards the inside of the tubular element (20) in order to retain the screw in the axial direction (X).

4. Device according to Claim 3, **characterized in that** the lugs (211) are distributed equally over the circumference of the upper edge.

5. Device according to one of Claims 2 to 4, **characterized in that** each elastic tab (21) comprises a lug (210) oriented towards the outside of the tubular element (20).

6. Device according to one of Claims 1 to 5, **characterized in that** the tubular element (20) comprises a shoulder (22).

7. Device according to Claim 6, **characterized in that** the opening (23) produced along the helical trajectory is formed between the shoulder (22) and the elastic tabs (21) of the tubular element.

8. Panel (1) for an electrical enclosure comprising:
- a wall (10) of which at least one edge is prolonged by a wing (11) folded towards the inside and parallel to the wall (10), so as to form a double wall on the edge, the wall (10) and the folded wing (11) forming between them a space (12) along the edge,
- a first orifice passing through the double wall,
**characterized in that**
- the panel (1) comprises a fastening device (2) as defined in one of the preceding claims,
- the tubular element (20) of said device (2) is positioned in the double wall and in the axis of the orifice formed through the double wall.

9. Panel according to Claim 8, **characterized in that** the tubular element (20) comprises:
- a plurality of elastic tabs (21) cut into its lateral wall along cutting lines parallel to the axial direction (X), the tabs (21) being terminated by a free end situated on an upper edge of the tubular element (20) and each tab comprising a lug (210) oriented towards the outside of the tubular element, and
- a shoulder (22),
- the tubular element (20) bearing, on one side, against the wall (10) by its lugs (210) and, on the other side, against the folded wing (11) by its shoulder (22).
